# EUROPÄISCHE PATENTANMELDUNG

(11) **EP 3 006 668 A1**
(43) Veröffentlichungstag der Anmeldung: **13.04.2016**
(21) Anmeldenummer: 14187954.4
(22) Anmeldetag: 07.10.2014
(51) Int. Cl.: F01D 5/08, F01D 25/12, F02C 9/18

(54) **Gasturbine mit zwei Drallzuleitungen zur Kühlung des Rotors**

(71) Anmelder: Siemens Aktiengesellschaft, 80333 München (DE)
(72) Erfinder: Kowalski, Christian, 46147 Oberhausen (DE); Krützfeldt, Joachim, 45481 Mülheim an der Ruhr (DE)

(57) **Zusammenfassung**

Die Erfindung betrifft eine Gasturbine (1) mit mindestens einem Rotor (2) sowie einem inneren Gehäuseteil (3) zur Ausbildung eines Ringraums (4) zwischen Rotor (2) und innerem Gehäuseteil (3), wobei der Ringraum (4) an einem Ende mit einem Verdichterabschnitt (5) und am anderen Ende mit einem Entspannungsturbinenabschnitt (6) fluidtechnisch verbunden ist, wobei der Ringraum (4) dazu vorgesehen ist, mit einem Kühlfluid (8) beschickt zu werden, welches erlaubt, den Rotor (2) bei Betrieb der Gasturbine (1) zu kühlen, und wobei weiterhin eine erste Drallzuleitung (11) und eine zweite Drallzuleitung (12) vorgesehen sind, welche dazu ausgebildet sind, den Ringraum (4) mit Kühlfluid (8) zu versorgen, wobei das Kühlfluid (8) mit einer Strömungskomponente in Tangentialrichtung zur Oberfläche des Rotors (2 ) beaufschlagt ist, und wobei weiterhin zwischen der ersten Drallzuleitung (11) und der zweiten Drallzuleitung (12) in dem Ringraum (4) ein erstes Dichtungselement (13) als Strömungswiderstand vorgesehen ist, wobei weiterhin zwischen dem ersten Dichtungselement (13) und dem Entspannungsturbinenabschnitt (6) eine Ableitung (15) in dem Rotor (2) vorgesehen ist, welche dazu ausgebildet ist, Kühlfluid (8) aus der zweiten Drallzuleitung (12) aufzunehmen und abzuleiten, wobei keine Bypassleitung vorgesehen ist, welche Kühlfluid (8) von der ersten Drallzuleitung (11) derart führen könnte, dass das so geführte Kühlfluid (8) um die zweite Drallzuleitung (12) herumgeführt wird, um wieder an einem Ort des Ringraums (4) zugeführt zu werden.

## Beschreibung

Die vorliegende Erfindung betrifft eine Gasturbine mit mindestens einem Rotor sowie einem inneren Gehäuseteil zur Ausbildung eines Ringraums zwischen Rotor und innerem Gehäuseteil, wobei der Ringraum dazu vorgesehen ist, mit einem Kühlfluid beschickt zu werden, welches erlaubt, den Rotor bei Betrieb der Gasturbine zu kühlen.

Aufgrund der hohen Gastemperaturen beim Verbrennungsbetrieb in einer Gasturbine ist es erforderlich, zahlreiche Funktionsbauteile geeignet zu kühlen. Insbesondere im Bereich des Mittelabschnitts einer Gasturbine, in welchem das aus der Verbrennung stammende Heißgas aus der Brennkammer mit zahlreichen Bauteilen in thermische Wechselwirkung tritt, ist eine effiziente Kühlung des sich drehenden Rotors erforderlich. Eine derartige Kühlung wird typischerweise über einen in Rotorlängsrichtung sich erstreckenden Ringraum ausgeführt, in welchen ein Kühlfluid, in der Regel Verdichterluft, eingebracht wird, um mit dessen Ausleitung aus dem Ringraum auch thermische Energie nach außen hin abzuführen.

Dem in den Ringraum eingebrachten Kühlfluid kommen im Wesentlichen zwei Funktionen zu. Neben der Funktion der Kühlung des Rotors dient das Kühlfluid zudem auch noch der Kühlung von Laufschaufeln der Entspannungsturbine, wobei das Kühlfluid hierzu über geeignete Ableitungen in dem Rotor zu den Laufschaufeln der Entspannungsturbine abgeführt wird. Zur Überführung des Kühlfluids in die betreffenden Ableitungen des Rotors ist es jedoch erforderlich, dass die Übertritts- bzw. Eintrittsarbeit an der Ableitungsöffnung möglichst gering ist. Aus diesem Grund wird das Kühlfluid in den Ringraum meist über ein Vordrallsystem eingeleitet, welches das Kühlfluid tangential in Bewegungsrichtung des Rotors zu dessen Oberfläche entsprechend beschleunigt. Idealerweise wird das Kühlfluid auf Umfangsgeschwindigkeit des Rotors gebracht, so dass zusätzliche Eintrittsarbeit bei Überführung in die Ableitungsöffnungen eingespart werden kann. Das Kühlfluid tritt zur Überführung typischerweise aus geeignet geformten Drallzuleitungen des Vordrallsystems aus, durchquert den Ringraum in seiner Querrichtung (senkrecht zur Längsrichtung des Rotors) und wird einer Öffnung der Ableitung in dem Rotor zugeströmt.

Aufgrund der tangentialen Strömungskonditionierung des Kühlfluids in Relation zur Oberfläche des Rotors wird zudem auch die Übertragung von mechanischer Rotorleistung an das Kühlfluid unter Wärmeerzeugung weitgehend verringert oder sogar verhindert. Das Kühlfluid befindet sich bei Austritt aus der Drallzuleitung somit auf der zu kühlenden Oberfläche des Rotors in einem thermisch zur Wärmeableitung besonders geeignet konditionierten Zustand, so dass die Wärmeübertragung auf das Kühlfluid aufgrund des lokalen Wärmegefälles effizient erfolgen kann, ohne dass eine Erwärmung des Kühlfluids aufgrund der Rotor-Fluid-Reibung einen wesentlich negativen Einfluss hätte. Um die Wärmeverluste des Rotors nach entsprechender Wärmeübertragung geeignet nach außen abführen zu können, ist es erforderlich, das Kühlfluid aus dem Ringraum kontrolliert abführen zu können.

Ein derartiges Ringraumsystem zur Kühlung des Rotors sowie zur Weiterleitung des Kühlfluids in die Eintrittskanäle des Rotors wird bspw. in der EP 1 537 296 B1 beschrieben. Darin wird ein Ringraum beschrieben, in welchem aus zwei Drallzuleitungen jeweils Kühlfluid in den Ringraum einströmt, bzw. in eine entsprechende Eintrittsöffnung einer Kühlfluidableitung in den Rotor übertritt. Beide Drallzuleitungen sind dazu ausgebildet, den Ringraum mit Kühlfluid zu versorgen, wobei das Kühlfluid mit einer Strömungskomponente in Tangentialrichtung zur Oberfläche des Rotors beaufschlagt ist, und wobei weiterhin die erste Drallzuleitung und die zweite Drallzuleitung durch mehrere Dichtungselemente fluidtechnisch voneinander entkoppelt sind. Um die gezielte Überleitung des Kühlfluids aus der zweiten Drallzuleitung in die Eingangsöffnung der Ableitung des Rotors nicht zu behindern, sieht die Erfindung aus dem Stand der Technik jedoch vor, eine Bypassleitung zu installieren, welche dem Kühlfluid in dem Ringraum die Umgehung der zweiten Drallzuleitung ermöglicht. Infolge der Bypass-Umleitung kommt es zu einer verhältnismäßig geringeren störenden Querströmung im Bereich des Überstromabschnittes zwischen der zweiten Drallzuleitung und der Eingangsöffnung der Ableitung im Rotor, so dass eine effiziente Überführung des Kühlfluids in den Rotor erfolgen kann.

Nachteilig an dieser aus dem Stand der Technik bekannten Ausführungsform ist jedoch zunächst ein deutlich höherer technischer Aufwand, da die Bypassleitung in innere Gehäuseteile der Gasturbine eingebaut werden muss. Weiterhin ergeben sich bei der aus dem Stand der Technik bekannten Lösung auch Toträume, die zwischen der ersten und zweiten Drallzuleitung ausgebildet sind, in welchen die Rotorkühlung in erster Linie durch Konvektionstransport des Kühlfluids erfolgt. Dies jedoch gewährleistet eine nur ungenügende Kühlung in den die Toträume begrenzenden Abschnitten des Rotors, und führt damit zu einer bereichsweise hohen Erwärmung des Rotors, die es jedoch zu vermeiden gilt.

Entsprechend dieser Nachteile aus dem Stand der Technik ergibt sich somit das technische Erfordernis, eine Gasturbine vorzuschlagen, welche die aus dem Stand der Technik bekannten Nachteile vermeiden kann. Insbesondere soll die vorzuschlagende Gasturbine eine vorteilhafte Kühlung der den Ringraum begrenzenden Bauteile ermöglichen, ohne jedoch hohen technischen Aufwand zu erfordern. Vor allem sollen Toträume in dem Ringraum vermieden werden, die zu bereichsweise unterschiedlichen Kühlraten Anlass geben.

Diese der Erfindung zugrundeliegenden Aufgaben werden gelöst durch eine Gasturbine gemäß Anspruch 1.

Insbesondere werden die der Erfindung zugrundeliegenden Aufgaben gelöst durch eine Gasturbine mit mindestens einem Rotor sowie einem inneren Gehäuseteil zur Ausbildung eines Ringraums zwischen Rotor und innerem Gehäuseteil, wobei der Ringraum an einem Ende mit einem Verdichterabschnitt und am anderen Ende mit einem Entspannungsturbinenabschnitt fluidtechnisch verbunden ist, wobei der Ringraum dazu vorgesehen ist, mit einem Kühlfluid beschickt zu werden, welches erlaubt, den Rotor bei Betrieb der Gasturbine zu kühlen, und wobei weiterhin eine erste Drallzuleitung und eine zweite Drallzuleitung vorgesehen sind, welche dazu ausgebildet sind, den Ringraum mit Kühlfluid zu versorgen, wobei das Kühlfluid mit einer Strömungskomponente in Tangentialrichtung zur Oberfläche des Rotors beaufschlagt ist, und wobei weiterhin zwischen der ersten Drallzuleitung und der zweiten Drallzuleitung in dem Ringraum ein erstes Dichtungselement als Strömungselement vorgesehen ist, wobei weiterhin zwischen dem ersten Dichtungselement und dem Entspannungsturbinenabschnitt eine Ableitung in dem Rotor vorgesehen ist, welche dazu ausgebildet ist, Kühlfluid aus der zweiten Drallzuleitung aufzunehmen und abzuleiten und wobei keine Bypassleitung vorgesehen ist, welche Kühlfluid aus der ersten Drallzuleitung derart führen könnte, dass das so geführte Kühlfluid um die zweite Drallzuleitung herum geführt wird, um wieder an einem Ort des Ringraums zugeführt zu werden.

Erfindungsgemäß betrifft der Begriff des Rotors alle sich drehenden Teile des Gasturbinenläufers, die eine Begrenzung des Ringraums erreichen. Insbesondere sind hierbei auch Scheiben und Zwischenscheiben des Gasturbinenläufers mit umfasst.

Erfindungsgemäß ist also vorgesehen, den Ringraum durch ein Dichtungselement in zwei fluidtechnisch voneinander entkoppelte Bereiche zu unterteilen, wobei der erste Bereich in erster Linie durch eine erste Drallzuleitung und der zweite Bereich in erster Linie durch eine zweite Drallzuleitung mit Kühlfluid versorgt wird. Hierbei ist jedoch ausdrücklich vorgesehen, keine Bypassleitung zur Kühlfluidleitung um die zweite Drallzuleitung herum vorzusehen, so dass der technische Aufwand entsprechend vermindert und die Kühlfunktion des Kühlfluids auf den gesamten den Ringraum ausbildenden Oberflächen gewährleistet werden kann.

Um eine effiziente Kühlung der sich drehenden Oberflächen des Rotors zu erreichen, wird das Kühlfluid in den Ringraum über die zwei Drallzuleitungen in die jeweiligen, fluidtechnisch voneinander getrennten Bereiche überführt. Durch das Dichtungselement wird der Ringraum in zwei Bereiche unterteilt, welche die beiden oben beschriebenen Funktionen weitgehend getrennt voneinander erfüllen können. In demjenigen Bereich, welcher nicht für eine Überführung des Kühlfluids in die Eingangsöffnungen der Ableitung des Rotors zur Weiterleitung des Kühlfluids an die Laufschaufeln der Entspannungsturbine vorgesehen sind, kann eine effiziente Versorgung des Ringraums mit praktisch ausschließlicher Kühlfunktion für die Rotoroberfläche erfolgen. In dem anderen Bereich des Ringraums ist jedoch mit einer Querströmung, d.h. Strömung in Längsrichtung des Ringraumes zu rechnen, welche mit dem Kühlfluidstrom der in die Eingangsöffnung der Ableitung des Rotors überführt werden sollen, strömungstechnisch wechselwirkt. Die Wechselwirkung führt zu einer etwas geringeren Übertragungseffizienz des Kühlfluids in die Eingangsöffnung der Ableitung, jedoch kann diese im Interesse einer verbesserten thermischen Kühlung der Oberfläche des Rotors akzeptiert werden. Zudem ist bevorzugt die Querströmungsmenge, welche mit dem in die Eingangsöffnung der Ableitung überführten Kühlfluids wechselwirkt, verhältnismäßig kleiner als die Menge des in die Eingangsöffnung der Ableitung überführten Kühlfluids, so dass nur ein nur geringer Effizienzverlust bei der Übertragung erfolgt.

Der Einsatz von zwei getrennten Drallzuleitungen erlaubt zudem die getrennte Einstellung von Massenströmen und Drücken des Kühlfluids in den jeweiligen Bereichen des Ringraums. Durch geeignete Wahl des ersten Dichtungselements können diese auch geeignet für die jeweilige Funktion des Kühlfluids im Wesentlichen verbessert eingestellt werden.

An dieser Stelle ist darauf hinzuweisen, dass die vorliegend beschriebene Gasturbine in erster Linie, bevorzugt ausschließlich eine stationäre Gasturbine ist. Der innere Gehäuseteil ist typischerweise als Wellenabdeckung ausgeführt, so dass der Ringraum zwischen den sich drehenden Teilen des Rotors und der Wellenabdeckung ausgebildet ist.

Da erfindungsgemäß keine Bypassleitung vorgesehen ist zur Umgehung der zweiten Drallzuleitung, bilden sich auch keine Toträume aus, in welchen eine Kühlung der Oberfläche der sich drehenden Teile lediglich durch Konvektionskühlung bewirkt werden würde. Vielmehr wird der gesamte Ringraum durch einen in Tangentialrichtung zur Rotoroberfläche sich drehenden Kühlfluidstrom effizient in beiden durch das erste Dichtungselement bestimmten Bereichen gekühlt.

Gleichzeitig kann eine gute Trennung der jeweiligen durch das erste Dichtungselement getrennten Bereiche vorgenommen werden, so dass eine verhältnismäßig effiziente Entkopplung der beiden Funktionen, nämlich Kühlung der Rotoroberfläche und Überführung des Kühlfluids in die Eingangsöffnung der Ableitung des Rotors, erreicht werden kann. Zudem kann durch Strömung in Längsrichtung des Ringraums über das zweite Dichtungselement hinweg eine ausreichende Oberflächenkühlung der sich bewegenden Teile des Rotors in dem betreffenden Bereich erreicht werden.

Entsprechend einer ersten besonders bevorzugten Ausführungsform ist vorgesehen, dass weiterhin ein zweites Dichtungselement in dem Dichtungsraum vorgesehen ist, das zwischen der zweiten Drallzuleitung und dem Entspannungsturbinenabschnitt angeordnet ist. Insbesondere ist das zweite Dichtungselement zwischen der Ableitung in den Rotor und dem Entspannungsturbinenabschnitt vorgesehen. Das zweite Dichtungselement verhindert hierbei im Wesentlichen einen Austausch des Kühlfluids mit benachbarten Bereichen des Entspannungsturbinenabschnitts, so dass der Kühlfluidverlust dorthin weitgehend gering gehalten werden kann.

Zudem ist es ausführungsgemäß möglich, den Bereich zwischen erstem Dichtungselement und zweitem Dichtungselement weitgehend klein zu halten, so dass dieser Bereich in erster Linie der Überführung von Kühlfluid in die Eingangsöffnung der Ableitung in den Rotor dient. Insbesondere kann dieser durch das erste und zweite Dichtungselement bestimmte Bereich des Ringraums kleiner ausgebildet sein, insbesondere nur ein Fünftel oder sogar weniger in Längserstreckungsrichtung des Ringraums, als der andere Bereich, welcher durch das erste Dichtungselement und den Verdichterabschnitt bestimmt ist. Aufgrund der vorteilhaften Tangentialgeschwindigkeit des Kühlfluids relativ zur Oberfläche des Rotors zwischen dem ersten und zweiten Dichtungselement muss dem Kühlfluid verhältnismäßig wenig kinetische Energie zugeführt werden, wodurch sich auch die Energieübertragungsverluste reduzieren lassen. Aufgrund der verminderten Energieübertragungsverluste ist die Temperatur des Kühlfluids verhältnismäßig geringer, so dass auch die Kühlleistung in dem Bereich relativ größer ist. Die Folge ist neben einem verbesserten Gasturbinenwirkungsgrad auch eine effizientere Kühlung.

Gemäß einer Weiterführung dieser Idee, ist die Ableitung radial in dem Rotor angeordnet. Insbesondere ist die Eingangsöffnung der Ableitung radial in dem Rotor angeordnet. Damit unterscheidet sich die Ausführungsform insbesondere von einer axialen Ausführungsform, welche typischerweise einen höheren Platzbedarf erfordert. Eine axiale Ausführungsform, also zur Überführung des Kühlfluids aus der zweiten Drallzuleitung in die Eingangsöffnung der Ableitung in den Rotor in Axialrichtung, ist etwa aus der oben zitierten Schrift zum Stand der Technik bekannt. Aufgrund der radialen Anordnung der Ableitung können zudem effizient Toträume verhindert werden, in welchen Konvektionskühlung einen wesentlichen Anteil an der Gesamtkühlung hat.

Gemäß einer weiteren bevorzugten Ausführungsform der Erfindung ist vorgesehen, dass der effektive Strömungsquerschnitt der zweiten Drallzuleitung größer ist als derjenige der ersten Drallzuleitung. Der effektive Strömungsquerschnitt ist hierbei der mittlere bzw. durchschnittliche Strömungsquerschnitt und bestimmt damit die Durchflussmenge an Kühlfluid pro Zeiteinheit. Insofern kann gewährleistet werden, dass der Kühlfluidstrom aus der zweiten Drallzuleitung zur Überführung in die Eingangsöffnung der Ableitung in den Rotor nur zu einem geringen Anteil durch die Querströmung entlang der Oberfläche des Rotors in Längsrichtung beeinflusst wird. Weiterhin können die Druckverhältnisse derart eingestellt werden, dass der am ersten Dichtungselement zu der Entspannungsturbinenabschnitt hingewandte Bereich einen größeren statischen Druck aufweist, als derjenige am ersten Dichtungselement auf der Seite zum Verdichterabschnitt hingewandte. Infolgedessen wird nur ein verhältnismäßig geringer Anteil des durch die erste Drallzuleitung in den Ringraum überströmenden Kühlfluids durch das erste Dichtungselement überströmen, so dass im Ringraum zwischen dem Verdichterabschnitt und dem ersten Dichtungselement im Wesentlichen eine Rückströmung hin zum Verdichterabschnitt erfolgen kann. Die Rückströmung führt somit entgegen der Hauptströmung des Heißgases in der Gasturbine in eine Richtung, welche zum Verdichter hin gerichtet ist.

Gemäß einer weiteren bevorzugten Ausführungsform der Erfindung ist vorgesehen, dass das Verhältnis von effektivem Strömungsquerschnitt von erster Drallzuleitung und zweiter Drallzuleitung derart gewählt ist, dass bei Betrieb der Gasturbine weniger als 10 % des durch die erste Drallzuleitung geführten Kühlfluids auch durch das erste Dichtungselement strömt. Insofern mischt sich verhältnismäßig wenig Kühlfluid, welches aus der ersten Drallzuleitung in den Ringraum überströmt, mit dem Kühlfluid, welches aus der zweiten Drallzuleitung in den Ringraum zugeführt wird. Insofern wird auch die tangentiale Strömungskomponente des Kühlfluids aus der zweiten Drallzuleitung in nur verhältnismäßig geringem Maße beeinflusst.

Aufgrund des höheren Drucks im Bereich der ersten Drallzuleitung im Vergleich zum Verdichterabschnitt kann weiterhin gewährleistet werden, dass sich zwischen erster Drallzuleitung und Verdichterabschnitt eine Rückströmung entlang der Längsrichtung des Ringraumes ausbilden kann, so dass eine effiziente Kühlung der den Ringraum begrenzenden Bauteile erreicht werden kann. Das rückgeführte Kühlfluid kann hierbei im Bereich des Verdichterabschnitts wieder in den Verdichter eintreten und wird erneut nach möglicher Kompression aus dem Verdichter ausgeströmt.

Gemäß einer weiteren bevorzugten Ausführungsform der Erfindung ist vorgesehen, dass das Ende des Ringraums, welches dem Verdichterabschnitt zugeordnet ist, derart ausgebildet ist, dass bei Betrieb der Gasturbine Kühlfluid in den Bereich der letzten Laufschaufelreihe des Verdichters überführt werden kann. Infolgedessen kann das in den Ringraum durch die erste Drallzuleitung eingeleitete Kühlfluid wieder in den Verdichter überführt werden, so dass sich im Wesentlichen eine Kreiszirkulation ausbilden kann. Aus dem Verdichter tritt das Kühlfluid nämlich erneut in verdichteter Form aus und kann der ersten Drallzuleitung erneut zugeführt werden. Durch die Ausbildung einer derartigen Kreisströmung kann der Verlust von Kühlfluid effizient verhindert werden, wodurch auch der Gasturbinenwirkungsgrad bei Betrieb verhältnismäßig hoch gehalten werden kann.

Gemäß einer weiteren besonders bevorzugten Ausführungsform der Erfindung ist vorgesehen, dass sowohl die erste Drallzuleitung als auch die zweite Drallzuleitung in dem inneren Gehäuseteil vorgesehen sind.
Gemäß einer weiteren besonders bevorzugten Ausführungsform der Erfindung ist vorgesehen, dass sowohl die erste Drallzuleitung als auch die zweite Drallzuleitung mit dem gleichen Plenum zur Versorgung mit Kühlfluid bei gleichem Druck in Fluidverbindung sind. Beide Drallzuleitungen werden also aus dem gleichen Kühlfluidreservoir gespeist, so dass die Druckeinstellung in dem jeweiligen Bereich des Ringraums durch eine geeignete Geometrie der jeweiligen Drallzuleitungen und der Dichtungselemente leicht vorgenommen werden kann.

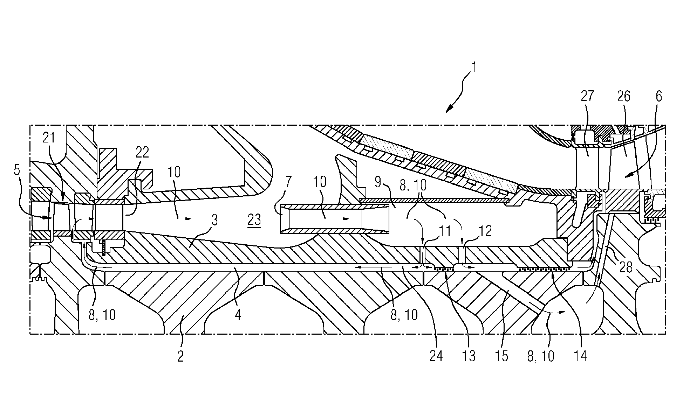

Nachfolgend soll die Erfindung anhand einer Figur im Detail beschrieben werden. Hierbei ist darauf hinzuweisen, dass die Figur lediglich schematisch zu verstehen ist und dies keine Einschränkung hinsichtlich der Ausführbarkeit der Erfindung darstellt.

Alle in der Figur gezeigten technischen Merkmale, die mit gleichen Bezugszeichen versehen sind, sollen eine gleiche technische Wirkung aufweisen.

Weiterhin ist darauf hinzuweisen, dass beliebige Kombinationen der nachfolgend beschriebenen technischen Merkmale vorliegend beansprucht werden sollen, soweit diese Kombinationen die der Erfindung zugrundeliegenden Aufgaben lösen können.

Hierbei zeigen:
- Figur: eine Querschnittsansicht durch einen Ringraum einer erfindungsgemäßen Gasturbine in Längsrichtung der Gasturbine.

Die vorliegende Figur zeigt eine Querschnittsansicht in Längsrichtung entlang des Ringraums 4 einer erfindungsgemäßen Gasturbine 1. Der Ringraum 4 ist hierbei durch einen Verdichterabschnitt 5 sowie einem Entspannungsturbinenabschnitt 6 jeweils endständig begrenzt und ist zwischen einem inneren Gehäuseteil 3, welches typischerweise als Wellenabdeckung ausgebildet ist, und dem Rotor 2 angeordnet. Die Bauteile des Rotors 2 vollführen während des Betriebs der Gasturbine 1 eine Drehbewegung, so dass diese gegenüber dem statischen inneren Gehäuseteil 3 sich bewegen (aus der Papierebene heraus oder in diese hinein).

Aufgrund der in diesem Bereich vorherrschenden hohen Temperaturen ist eine Kühlung des inneren Gehäuseteils 3 sowie des Rotors 2 erforderlich, um die Wärme in diesen Bereichen entsprechend abführen zu können. Die Kühlung wird mittels eines Kühlfluids 8, welches vorliegend Verdichterluft 10 ist, vorgenommen, wobei die Verdichterluft 10 im Bereich des Verdichterausgangs 22 austritt und im Bereich des Diffusors 23 verzögert wird. Aufgrund der Verzögerung stellt sich ein verhältnismäßig höherer statischer Druck ein, mit welchem die Verdichterluft 10 nach Passieren einer weiteren Öffnung 7 in dem Gehäuse einem geeigneten Plenum 9 überführt werden kann. Das Plenum 9 dient als Reservoir der Verdichterluft 10, um die beiden mit dem Ringraum 4 in fluidtechnischer Verbindung stehenden Drallzuleitungen 11 und 12 mit Kühlfluid 8 (Verdichterluft 10) zu beschicken.

Die beiden Drallzuleitungen 11 und 12 erlauben die Überführung des Kühlfluids 8 in jeweils durch ein erstes Dichtungselement 13 getrennte Bereiche des Ringraums 4, in welchen im Wesentlichen zwei Funktionen durch das Kühlfluid 8 wahrgenommen werden. Einerseits dient das Kühlfluid 8 zur oberflächlichen Wärmeabführung von den den Ringraum 4 begrenzenden Bauteilen, andererseits dient das Kühlfluid 8 der Überführung in eine Ableitung 15, welche eine nicht mit Bezugszeichen versehene Eingangsöffnung aufweist, zu einem Kanalsystem 28 in den Rotor 2. Das Kanalsystem 28 erlaubt in Folge, das Kühlfluid 8 der ersten Laufschaufelreihe 26 der Entspannungsturbine zu Kühlungszwecken zuzuführen.

Für eine möglichst effiziente Überführung des Kühlfluids 8 aus der zweiten Drallzuleitung 12 in die Eingangsöffnung der Ableitung 15 wird das Kühlfluid 8 mittels der zweiten Drallzuleitung 12 mit einer tangentialen Bewegungskomponente beaufschlagt, welches das Kühlfluid 8 nach Austritt aus der zweiten Drallzuleitung 12 im Wesentlichen in Umlaufrichtung der Rotoroberfläche strömen lässt. Hierdurch wird weitgehend vermeiden, dass bei Überströmung in die Eingangsöffnung der Ableitung 15 der Rotor selbst das Kühlfluid 8 mit einer entsprechenden Bewegungskomponente beaufschlagen muss, wodurch dem Rotor 2 entsprechend Drehenergie entzogen würde. Der der zweiten Drallzuleitung 12 zugeordnete Bereich des Ringraums 4 ist endständig jeweils durch ein Dichtungselement 13 und 14 abgedichtet. Insofern kann ebenfalls gewährleistet werden, dass ein hoher Anteil an über die zweite Drallzuleitung 12 zugeführten Kühlfluids 8 in die Ableitung 15 überführt werden kann. Ein geringerer Anteil strömt jedoch in Längsrichtung des Ringraums 4 über das zweite Dichtungselement 14 hinweg in den Entspannungsturbinenabschnitt 6. Von dort aus wird das Kühlfluid 8 zusammen mit dem in der Entspannungsturbine entspannten Heißgas aus der Gasturbine 1 abgeführt.

Weiterhin wird dem Ringraum über eine erste Drallzuleitung 11, Kühlfluid 8 zugeführt. Das Kühlfluid 8 strömt hierbei in einen Bereich zwischen dem ersten Dichtungselement 13 und dem Verdichterabschnitt 5 ein, wobei sich eine Gegenströmung ausbildet, so dass ein Kühlfluidstrom von der ersten Drallzuleitung 11 zu dem Verdichter im Ringraum 4 strömt. Dieser Kühlfluidstrom dient ausschließlich dem Wärmeabtransport, von den diesen Bereich des Ringraums 4 begrenzenden Bauteilen. Nach Überführung des Kühlfluids 8 in den Verdichterabschnitt 5 wird das Kühlfluid 8 nach erneuter Verdichtung über den Verdichterausgang 22 erneut den Diffusor 23 als Verdichterluft 10 zugeführt. Insofern kann sich eine Kreisströmung zwischen dem Verdichterabschnitt 5 sowie der ersten Drallzuleitung 11 einstellen, und die Wärme aus dem jeweils zugeordneten Bereich des Ringkanals 4 kann effizient abgeführt werden.

Je nach Einstellung der Strömungsquerschnitte der ersten Drallzuleitung 11 bzw. zweiten Drallzuleitung 12 und je nach Dichtungswirkung des ersten Dichtungselementes 13 bzw. zweiten Dichtungselementes 14 können die Strömungsverhältnisse in den beiden voneinander durch das erste Dichtungselement 13 getrennten Bereichen des Ringkanals 4 vorteilhaft eingestellt werden, so dass sich auch etwa eine Rückströmung des Kühlfluids 10 zu dem Verdichterabschnitt 5 einstellen kann. Weitere Ausführungsformen ergeben sich aus den Unteransprüchen.

## Patentansprüche

1. Gasturbine (1) mit mindestens einem Rotor (2) sowie einem inneren Gehäuseteil (3) zur Ausbildung eines Ringraums (4) zwischen Rotor (2) und innerem Gehäuseteil (3), wobei der Ringraum (4) an einem Ende mit einem Verdichterabschnitt (5) und am anderen Ende mit einem Entspannungsturbinenabschnitt (6) fluidtechnisch verbunden ist, wobei der Ringraum (4) dazu vorgesehen ist, mit einem Kühlfluid (8) beschickt zu werden, welches erlaubt, den Rotor (2) bei Betrieb der Gasturbine (1) zu kühlen, und wobei weiterhin eine erste Drallzuleitung (11) und eine zweite Drallzuleitung (12) vorgesehen sind, welche dazu ausgebildet sind, den Ringraum (4) mit Kühlfluid (8) zu versorgen, wobei das Kühlfluid (8) mit einer Strömungskomponente in Tangentialrichtung zur Oberfläche des Rotors (2) beaufschlagt ist, und wobei weiterhin zwischen der ersten Drallzuleitung (11) und der zweiten Drallzuleitung (12) in dem Ringraum (4) ein erstes Dichtungselement (13) als Strömungswiderstand vorgesehen ist, wobei weiterhin zwischen dem ersten Dichtungselement (13) und dem Entspannungsturbinenabschnitt (6) eine Ableitung (15) in dem Rotor (2) vorgesehen ist, welche dazu ausgebildet ist, Kühlfluid (8) aus der zweiten Drallzuleitung (12) aufzunehmen und abzuleiten,
**dadurch gekennzeichnet, dass** keine Bypassleitung vorgesehen ist, welche Kühlfluid (8) aus der ersten Drallzuleitung (11) derart führen könnte, dass das so geführte Kühlfluid (8) um die zweite Drallzuleitung (12) herumgeführt wird, um wieder an einem Ort des Ringraums (4) zugeführt zu werden.

2. Gasturbine nach Anspruch 1,
**dadurch gekennzeichnet, dass** weiterhin ein zweites Dichtungselement (14) in dem Ringraum (4) vorgesehen ist, welches zwischen der zweiten Drallzuleitung (12) und dem Entspannungsturbinenabschnitt (6) angeordnet ist.

3. Gasturbine nach Anspruch 2,
**dadurch gekennzeichnet, dass** die Ableitung (15) radial in dem Rotor (2) angeordnet ist.

4. Gasturbine nach einem der vorhergehenden Ansprüche,
**dadurch gekennzeichnet, dass** der effektive Strömungsquerschnitt der zweiten Drallzuleitung (12) größer ist als derjenige der ersten Drallzuleitung (11).

5. Gasturbine nach einem der vorhergehenden Ansprüche,
**dadurch gekennzeichnet, dass** das Verhältnis von effektivem Strömungsquerschnitt von erster Drallzuleitung (11) und zweiter Drallzuleitung (12) derart gewählt ist, dass bei Betrieb der Gasturbine (1) weniger als 10% des durch die erste Drallzuleitung (11) geführten Kühlfluids (8) durch das erste Dichtungselement (13) strömt.

6. Gasturbine nach einem der vorhergehenden Ansprüche,
**dadurch gekennzeichnet, dass** bei Betrieb der Gasturbine (1) der statische Druck am Ausgang der ersten Drallzuleitung (11) zum Ringraum (4) hin größer ist, als der statische Druck im Ringraum (4) am Verdichterabschnitt (5).

7. Gasturbine nach einem der vorhergehenden Ansprüche,
**dadurch gekennzeichnet, dass** das Ende des Ringraums (4), welches dem Verdichterabschnitt (5) zugeordnet ist derart ausgebildet ist, bei Betrieb der Gasturbine (1) Kühlfluid (8) in den Bereich der letzten Laufschaufelreihe (21) des Verdichters (20) überführt werden kann.

8. Gasturbine nach einem der vorhergehenden Ansprüche,
**dadurch gekennzeichnet, dass** sowohl die erste Drallzuleitung (11) als auch die zweite Drallzuleitung (12) in dem inneren Gehäuseteil (3) vorgesehen sind.

9. Gasturbine nach einem der vorhergehenden Ansprüche, **dadurch gekennzeichnet, dass** sowohl die erste Drallzuleitung (11) als auch die zweite Drallzuleitung mit dem gleichen Plenum (9) zur Versorgung mit Kühlfluid (8) bei gleichem Druck in Fluidverbindung sind.
